Europäisches Patentamt

European Patent Office

Office européen des brevets

(11) Veröffentlichungsnummer: **0 292 776 B1**

# (12) EUROPÄISCHE PATENTSCHRIFT

(45) Veröffentlichungstag der Patentschrift: **25.11.92**

(21) Anmeldenummer: **88107490.0**

(22) Anmeldetag: **10.05.88**

(51) Int. Cl.5: **H04N 5/05**

(54) **Schaltungsanordnung zur automatischen Umschaltung der Regelgeschwindigkeit eines Phasenregelkreises.**

(30) Priorität: **23.05.87 DE 3717444**

(43) Veröffentlichungstag der Anmeldung:
**30.11.88 Patentblatt  88/48**

(45) Bekanntmachung des Hinweises auf die Patenterteilung:
**25.11.92 Patentblatt  92/48**

(84) Benannte Vertragsstaaten:
**AT BE CH DE ES FR GB IT LI LU NL SE**

(56) Entgegenhaltungen:
**GB-A- 2 056 801**
**US-A- 4 250 525**

**BENSON, "Television Engineering Handbook", McGraw-Hill, New-York, 1986, Seiten 13.142-13.144 und 13.163-13.167.**

(73) Patentinhaber: **Deutsche Thomson-Brandt GmbH**
**Hermann-Schwer-Strasse 3 Postfach 1307**
**W-7730 Villingen-Schwenningen(DE)**

(72) Erfinder: **Dieterle, Franz**
**Sommerauerstrasse 31**
**W-7742 St. Georgen(DE)**
Erfinder: **Mai, Udo**
**Mühleschweg 2**
**W-7730 Villingen-Schwenningen 23(DE)**
Erfinder: **Hartmann, Uwe**
**Tallardstrasse 15**
**W-7730 Villingen-Schwenningen 23(DE)**

EP 0 292 776 B1

**Beschreibung**

Die Erfindung bezieht sich auf eine Schaltungsanordnung zur automatischen Umschaltung der Regelgeschwindigkeit des Phasenregelkreises in Abhängigkeit von der Wiedergabe von Fernsehsendersignalen und aufgezeichneten Signalen.

Bei der Wiedergabe von Fernsehsendersignalen wird eine kleine Regelgeschwindigkeit gefordert, damit die Synchronisation störungsfrei arbeitet und nicht durch Störimpulse, die bei verrauschten Sendersignalen vorhanden sind, dadurch negativ beeinflußt wird, da bei der hohen Regelgeschwindigkeit die Synchronisation auf diese Störimpulse sofort ansprechen würde. Dadurch würde das wiedergegebene Bild unruhig. Diese Störung ist unter dem Begriff "Jitter" bekannt und zeigt sich auf dem Bildschirm als horizontales Ausreissen von senkrechten Linien. Bei Signalen von z.B. einem Videorecorder muß die Regelgeschwindigkeit groß sein, damit Phasenabweichungen zwischen den Impulsen des Horizontaloszillators und den aus dem Videorecorder zugeführten Synchronimpulsen schnell korrigiert werden.

Größere Phasenabweichungen ergeben sich insbesondere im Bereich des vertikalen Rücklaufs der Elektronenstrahlen, weil in dieser Zeit die den Aufzeichnungsträger abtastenden Köpfe umgeschaltet werden. Wird die Regelgeschwindigkeit des Phasenregelkreises bei Anliegen von Videosignalen aus einem Aufzeichnungsträger nicht erhöht, machen sich Störungen in der Zeilensynchronisation während der ersten Zeilen des Bildes bemerkbar. Die Regelgeschwindigkeit wird entweder durch Umschalten der Zeitkonstante des Filters im Regelkreis oder durch Erhöhung des Regelstroms zur Auf- bzw. Entladung eines die Regelspannung liefernden Kondensators erreicht. Üblicherweise geschieht die Umschaltung der Regelgeschwindigkeit dadurch, daß ganz bestimmte Programmplätze vorgesehen sind, bei deren Belegung mit einer VCR-Signalquelle die Umschaltung automatisch erfolgt Man ist dann jedoch an diese bestimmten Programmplätze gebunden. Beim sogenannten AV-Betrieb, sei es über die SCART- oder die Av-Buchse, ist zur Zeit ausschließlich ein Betrieb mit hoher Regelgeschwindigkeit möglich, was jedoch nicht immer unbedingt erwünscht bzw. erforderlich ist. Eine kleine Regelgeschwindigkeit hat bekanntlich den Vorteil, daß die Störbefreiung wesentlich größer ist. Beim Empfang eines Sendersignals wird deshalb auf diese kleine Regelgeschwindigkeit umgeschaltet.

Der Erfindung liegt die Aufgabe zugrunde, eine teuere Umschaltung zu vermeiden, ohne nennenswerte Qualitätseinbußen und nachteilige Auswirkungen in Kauf nehmen zu müssen. Diese Aufgabe wird durch die im Patentanspruch angegebene Erfindung gelöst.

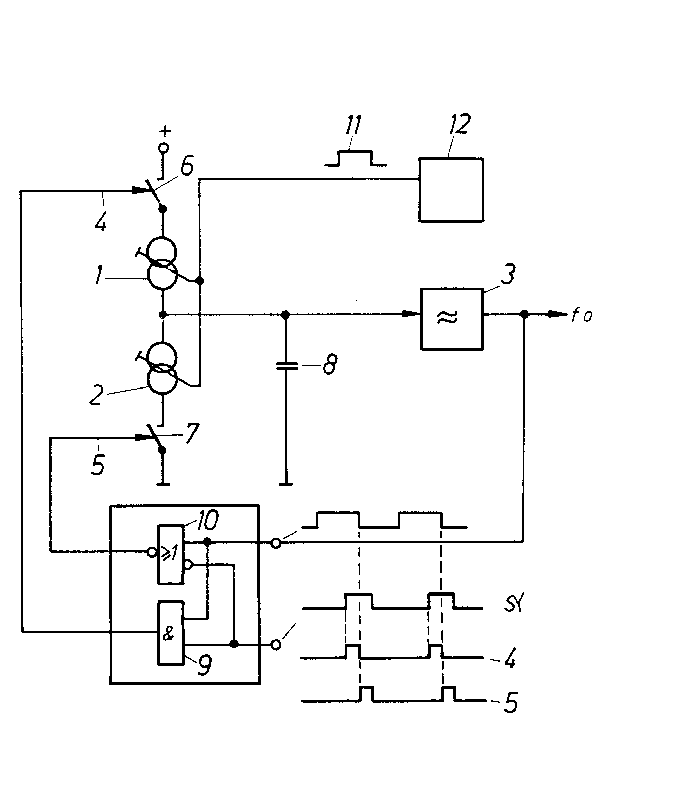

Die Erfindung wird nachstehend an einem Ausführungsbeispiel mit Hilfe der Zeichnung erläutert.

Bei der Figur handelt es sich um die Darstellung eines Phasenregelkreises für die Horizontalablenkung in einem Fernsehempfänger. Ein derartiger Phasenregelkreis ist mit zwei Konstantstromquellen 1 und 2 aufgebaut, die von der Flanke des zu regelnden Oszillatorsingals des Oszillators 3 und dem Synchronsignal SY abwechselnd eingeschaltet werden, solange bis Ladestrom und Entladestrom für den Kondensator 8 im Gleichgewicht sind. Eine mögliche Steuerschaltung für die Kontakte 6 und 7 ist aus logischen Verknüpfungsschaltungen aufgebaut in Gestalt eines AND-Gatters 9 und eines NOR-Gatters 10 welches einen invertierenden Eingang besitzt, an den die Synchronsignale gelegt sind. An den Eingängen der Gatter 9 und 10 liegen die Synchronsignale und Oszillatorsignale. Ihre logischen Verknüpfungen ergeben die erforderlichen Steuerspannungen auf den Steuerleitungen 4 und 5 für die Kontakte 6 und 7 Die Stromquellen 1 und 2 laden bzw. entladen den Kondensator 8, an welchem die Regelspannung zur Regelung des Oszillators 3 entsteht. Der Regelstrom und somit die Regelgeschwindigkeit besitzt während des Bildhinlaufs eine festgelegte Größe. Die Größe des Regelstroms und damit die Regelgeschwindigkeit ist umschaltbar. Die Umschaltung erfolgt während des vertikalen Rücklaufs der Elektronenstrahlen in der Bildröhre, d h. im unsichtbaren Teil des Bildes. Den Steuerimpuls 11 zur Umschaltung des Regelstromes entnimmt man in vorteilhafter Weise einer bereits im Empfänger vorhandenen Steuerschaltung 12 wie sie in der DE-C 31 27 493 (entsprechend EP-A-00 69 863) beschrieben ist. Er besitzt z.B. eine Dauer von z.B. 22 Zeilenperioden. Auf diese Weise wird die Phasenregelung in demjenigen Zeitbereich schnell gemacht, in welchem sie schnell sein muß und kann in demjenigen Zeitbereich langsam sein, in welchem eine kleine Regelgeschwindigkeit sinnvoll ist. Das Filter im Phasenregelkreis muß in diesem Fall in seinem Frequenzgang derart angepasst werden, daß die Umschaltung der Regelgeschwindigkeit während des Bildhinlaufs nicht stört.

Die Regelgeschwindigkeit des Phasenregelkreises kann selbstverständlich auch auf eine andere Weise verändert werden, z.B. indem der Wert des Filterkondensators umgeschaltet wird.

**Patentansprüche**

1. Schaltungsanordnung zur automatischen Umschaltung der Regelgeschwindigkeit eines Phasenregelkreises in einer Oszillatorschaltung eines Fernsehempfängers mit einer Steuerschaltung, die die Regelgeschwindigkeit innerhalb des vertikalen Rücklaufs der Elektronenstrahlen durch Erhöhung des Regelstromes des Phasenregelkreises vergrößert, **dadurch gekennzeichnet,** daß eine erste steuerbare Konstantstromquelle (1) vorgesehen ist, die über einen steuerbaren Schalter (6) einer Kondensator (8) des Phasenregelkreises auflädt und daß eine zweite Konstantstromquelle (2) vorgesehen ist, die den Kondensator (8) des Phasenregelkreises über einen steuerbaren Schalter (7) entlädt und daß die steuerbaren Schalter (6, 7) mit Hilfe von Steuersignalen (4, 5) aus einer Steuerschaltung wechselweise angesteuert werden, die aus einer Logikschaltung besteht, die ein UND-Gatter (9) und ein NOR-Gatter (10) besitzt, wobei an einen ersten Eingang des UND-Gatters (9) das Ausgangssignal der Oszillatorschaltung (3) und an einen zweiten Eingang des UND-Gatters (9) der Synchronpuls des Fernsehsignals angelegt ist und das Ausgangssignal (4) des UND-Gatters (9) den Schalter (6) steuert, und daß an einen ersten Eingang des NOR-Gatters (10) das Ausgangssignal der Oszillatorschaltung (3) und an einen zweiten Eingang der invertierte Synchronpuls des Fernsehsignals gelegt ist und das Ausgangssignal (5) des NOR-Gatters (10) den Schalter (7) steuert.

## Claims

1. Circuit arrangement for automatic switching of the control speed of a phase control circuit in an oscillator circuit of a television receiver with a controller which increases the control speed within the vertical flyback of the electron beams by increasing the control current of the phase control circuit, characterised in that there is provided a first controllable source of constant current (1) which charges a capacitor (8) of the phase control circuit via a controllable switch (6), and a second source of constant current (2) which discharges the capacitor (8) of the phase control circuit via a controllable switch (7), and in that with the help to control signals (4,5) from a controller the controllable switches (6,7) are triggered alternately, the controller consisting of a logic circuit which has an AND gate (9) and a NOR gate (10), whereby the output signal of the oscillator circuit (3) is fed to the first input of the AND gate (9), and the sync pulse of the television signal is fed to the second input of the AND gate (9), and the output signal (4) of the AND gate (9), controls switch (6), and in that the output signal of the oscillator circuit (3) is fed to a first input of the NOR gate (10) and the inverted sync pulse of the television signal is fed to a second input, and the output signal (5) of the NOR gate (10) controls switch (7).

## Revendications

1. Dispositif de circuit pour la commutation automatique de la vitesse de réglage d'un circuit de réglage de phase dans un circuit d'oscillateur d'un récepteur de télévision avec un circuit de commande qui augmente la vitesse de réglage à l'intérieur du retour vertical des faisceaux d'électrons par augmentation du courant de réglage du circuit de réglage de phase, **caractérisé en ce** qu'une première source de courant constant (1) qui peut être commandée est prévue qui charge. par un commutateur qui peut être commandé (6) un condensateur (8) du circuit de réglage de phase et qu'une seconde source de courant constant (2) est prévue qui décharge le condensateur (8) du circuit de réglage de phase par un commutateur qui peut être commandé (7) et que les commutateurs qui peuvent être commandés (6, 7) sont excités alternativement à l'aide de signaux de commande (4, 5) provenant d'un circuit de commande qui se compose d'un circuit logique qui possède une porte ET (9) et une porte NON-OU (10), le signal de sortie du circuit d'oscillateur (3) étant appliqué à une première entrée de la porte ET (9) et l'impulsion synchrone du signal de télévision étant appliquée à une seconde entrée de la porte ET (9) et le signal de sortie (4) de la porte ET (9) commandant le commutateur (6) et que le signal de sortie du circuit d'oscillateur (3) est appliqué à une première entrée de la porte NON-OU (10) et l'impulsion synchrone inversée du signal de télévision à une seconde entrée et que le signal de sortie (5) de la porte NON-OU (10) commande le commtuateur (7).